# EUROPEAN PATENT SPECIFICATION

(11) **EP 0 367 465 B1**
(45) Date of publication and mention of the grant of the patent: **17.01.1996**
(21) Application number: 89310866.2
(22) Date of filing: 23.10.1989
(51) Int. Cl.: G11B 7/09

(54) **Optical pickup devices**
Optische Abtasteinrichtungen
Dispositifs d'enregistrement optique

(30) Priority: 29.10.1988 JP 274040/88
(43) Date of publication of application: 09.05.1990
(73) Proprietor: SONY CORPORATION, Tokyo 141 (JP)
(72) Inventor: Kume, Hidehiro c/o Sony Corp. Patents Division, Tokyo (JP); Yamamoto, Etsufumi, Sony Corp. Patents Division, Tokyo (JP); Nagashima, Kenji, Sony Corp. Patents Division, Tokyo (JP)
(74) Representative: Pilch, Adam John Michael

(56) References cited:
- EP-A- 0 258 450
- FR-A- 2 601 173
- GB-A- 2 196 115
- JEE JOURNAL OF ELECTRONIC ENGINEERING. vol. 24, no. 248, August 1987, TOKYO JP pages 31 - 34; Kazuki Urita: "Semicondactor lasers for Optical Memory Disks: High Output and Low Noise Required"

## Description

This invention relates to optical pickup devices such as those suitable for recording and/or reproducing signals onto or from an optical disc.

An optical pickup device is known in which a semiconductor laser unit is provided as a light source and in which a light beam emanating from this semiconductor laser unit is converged by a suitable optical system onto a signal recording surface of an optical disc to write and/or read data signals onto or from the signal recording surface. Examples of this type of optical pickup device are disclosed in US Patents US-A-4 766 583 and US-A-4 751 694. The optical pickup devices disclosed therein are provided with photosensors, such as photodiodes, for detecting the light beam reflected from the signal recording surface of the optical disc.

In such optical pickup devices, so-called focusing servo and tracking servo control operations are performed on the basis of signals detected by the photosensor. As a result of these servo control operations, the light beam projected on the signal recording surface may be converged accurately on the signal recording surface even though the optical disc is subject during its rotation to so-called de-centring or deviation from planarity, so that a beam spot formed by the convergence of the light beam will correctly trace the spirally or concentrically extending recording track formed on the signal recording surface.

More specifically, for effecting the focusing servo control operation, a focusing error signal indicating the deviation of the beam spot with respect to the signal recording surface of the optical disc in a direction at right angles to the signal recording surface (that is, along the direction of the optical axis of the light beam) is formed on the basis of the detection output signal, as disclosed for example in US Patent US-A-4 059 841. Then, on the basis of this focusing error signal, the optical system for converging the light beam on the signal recording surface (such as an object lens as disclosed in the above US Patent US-A-4 766 583) is controlled so as to be displaced in a direction towards or away from the signal recording surface.

For effecting the tracking servo control operation, a tracking error signal indicating the deviation of the beam spot from a given recording track along the radial direction of the optical disc is formed on the basis of the detection output from the photosensor and in accordance with, for example, a push-pull method as described in Japanese Patent Publication No. JP-A-61-32735 or a three-beam method as described in Japanese Patent Publication No. JP-B-53-13123.

If the size of the above-described optical pickup device is to be reduced, it is necessary to reduce the distance between the semiconductor laser unit and the signal recording surface by reducing the size or the focal distance of the optical device for converging the light beam emanating from the semiconductor laser unit on the signal recording surface of the optical disc.

However, when the distance between the semiconductor laser unit and the signal recording surface is reduced, so-called return light to the semiconductor laser unit increases. The return light is the light beam fraction which is reflected by the signal recording surface and returned to the semiconductor laser unit. In general, an increase in the return light results in increase in laser unit noise or light intensity noise to give rise to various problems, such as fluctuations in the light emitting power, so that it may occasionally become impossible to perform correct write and/or read operations for data signals.

Semiconductor laser units may be classified into a so-called refractive index waveguide type unit oscillating in a single mode and a so-called gain waveguide type unit oscillating in a multiple mode. The gain waveguide type laser unit is subject to laser unit noise due to return light to a lesser extent than the refractive index waveguide type unit. Hence, in order to reduce the size of the optical pickup device, it is more advisable to use the gain waveguide type laser unit than the refractive index waveguide type unit as the light source.

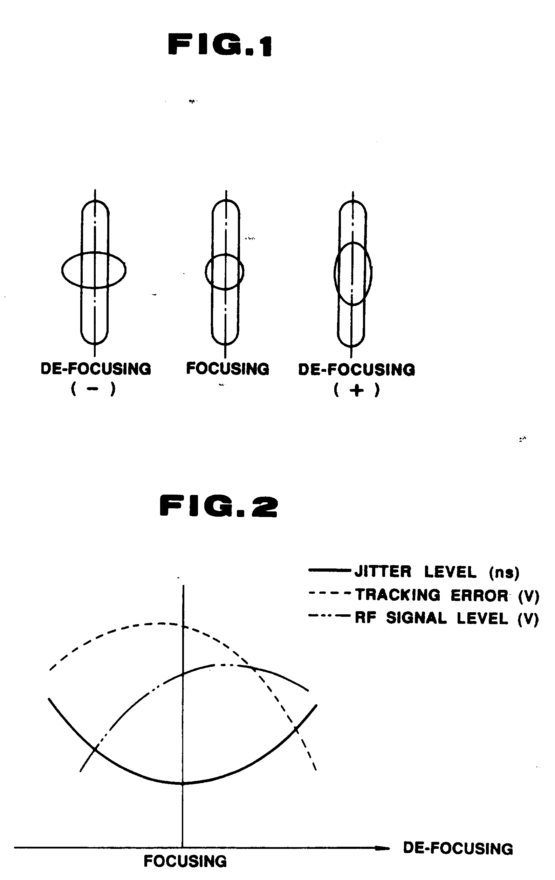

However, the gain waveguide type laser unit exhibits a larger astigmatic difference than the refractive index waveguide type laser unit. The light beam emitted by the semiconductor laser unit is subject to astigmatism due to the astigmatic difference characteristic of the semiconductor laser unit. The result is that the beam spot formed on the signal recording surface assumes the shape of an ellipse having its major axis extending either along or perpendicular to a recording track depending on the de-focusing direction, as shown in Figure 1 of the accompanying drawings.

Referring to Figure 2 of the accompanying drawings, when the beam spot shape is changed as described above on occurrence of de-focusing with resulting fluctuations in the beam spot area measured on the recording track, the maximum level positions of the tracking error signal and the data or RF signal are not coincident with the focusing position corresponding to minimum jitter of the read-out or written data signals. That is, the tracking error signal and RF signal levels exhibit asymmetry with respect to the focusing position.

As a result of such asymmetry of the tracking error signal and RF signal levels with respect to the focusing position, it may occasionally become impossible to effect focusing or tracking servo operations on occurrence of de-focusing due to de-centring or deviation from planarity of the optical disc.

Such astigmatism has previously been corrected by a plane parallel glass which is inclined a predetermined angle with respect to the optical axis of the light beam and which is placed on a light path along which the light beam is dispersed or converged. However, not only is it not possible with the use of a plane parallel correction plate to correct the astigmatism completely, but the use of such a correction plate impedes reduction in size of the optical pickup device.

FR-A-2601173 discloses an optical pick up wherein a beam of light from a laser diode has its optical axis at an angle of 45° to the tangential direction of the signal track at which it is directed so that the signal track is irradiated and a return light beam from the disc is received by a four division photo-detector, one of the dividing lines of the photo-detector being aligned with said tangential direction.

EP-A-258450 discloses a composite arrangement of a light emitting and receiving unit which allows an optical head including the unit to be of small size, the unit incorporating a semiconductor laser provided on a semiconductor substrate to which a beam splitting prism is fixed, a pair of split detectors being incorporated to form the composite arrangement.

The Journal of Electronic Engineering 08/87 No. 248 at pages 31-34 discloses the use of semiconductor lasers for reading optical memory disks and particularly the possibility of using a gain waveguide type laser unit for low feedback beam noise.

According to the present invention there is provided an optical pickup device in which a light beam from a laser light source is convergeable by an object lens onto a signal recording surface of an optical disc to follow recording tracks formed on the signal recording surface, wherein the light source comprises a semiconductor laser unit; and
the light beam emanating from the semiconductor laser unit is arranged in such a manner that the light beam is so projected onto the optical disc that the angle between the meridional plane of the light beam and a line tangential to the recording tracks is about 45° whereby asymmetries of the light beam on the optical disc on both sides of the tangential line arising as a function of the direction of de-focusing of the beam spot may be compensated;
characterised in that, to provide focus error compensation the semiconductor laser unit is provided on a semiconductor substrate on which a beam splitting prism is affixed and on which a pair of split detectors are formed at an area where the beam splitting prism is provided, so as to form a light emitting/receiving composite unit;
the pair of split detectors are each split into first to third light receiving elements along split lines extending parallel to one another; and
the light receiving elements of the split detectors are arrayed parallel to the meridional plane of the light beam.

In such an optical pickup device the effect of the astigmatic difference characteristic of the semiconductor laser unit may be sufficiently corrected and the properties of the device associated with de-focusing may be improved without using a plane parallel correction plate.

The preferred optical pickup device is reduced in size yet is affected to a lesser extent by the return beam, such as with the use of a gain waveguide type unit.

By arranging for the meridional plane of the light beam to be at a predetermined angle with respect to the tangential line drawn with respect to the recording track of the optical disc, asymmetry of the beam spot on the disc on both sides of the tangential line, which is brought about in dependence upon the de-focusing direction, may be compensated so that, even in cases in which the light beam emanating from the semiconductor laser unit undergoes astigmatism, the reflected light from the recording track is not changed in intensity as a function of the de-focusing direction.

The invention will now be described by way of example with reference to the accompanying drawings, throughout which like parts are referred to by like references, and in which:
Figure 1 is a diagrammatic view showing the shape of a beam spot formed on an optical disc by a known optical pickup device;
Figure 2 is a chart showing various characteristics of the known optical pickup device;
Figure 3 is a perspective view showing an optical pickup device according to an embodiment of the present invention;
Figure 4 is a perspective view showing an arrangement of a light emitting/receiving composite unit of the optical pickup device shown in Figure 3;
Figure 5 is a diagrammatic view showing an arrangement of split detectors of the light emitting/receiving composite unit of Figure 4 and a circuit for processing output signals of the split detectors;
Figure 6 is a diagrammatic view showing the shape of a light spot formed on the optical disc by the optical pickup device shown in Figure 3;
Figure 7 is a chart showing various features of the optical pickup device embodying the present invention;
Figure 8 is a perspective view showing a modification of the optical pickup device according to another embodiment of the present invention;
Figure 9 is a longitudinal cross-sectional view showing major parts of the optical pickup device shown in Figure 8; and
Figure 10 is a plan view showing an alternative mounting state of the light emitting/receiving unit of the optical pickup device.

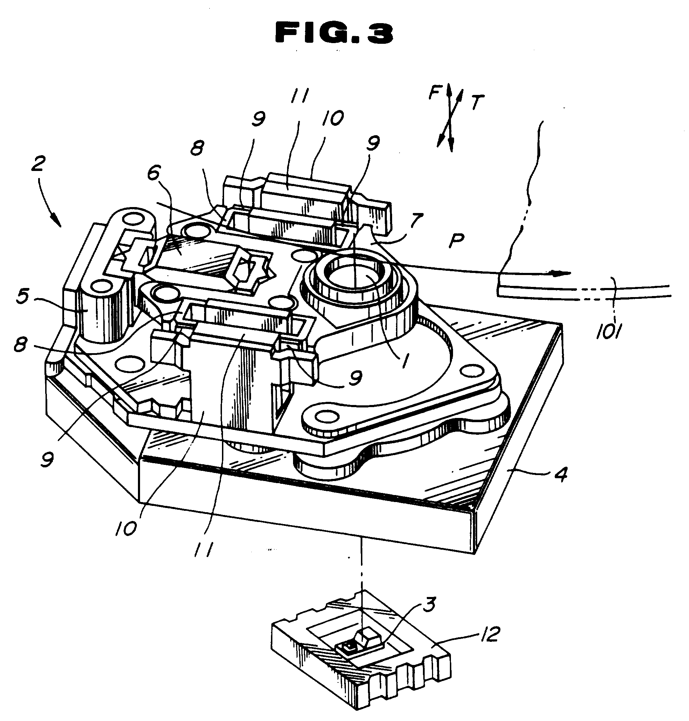

As shown in Figure 3, an optical pickup device according to one embodiment of the present invention comprises an object lens driving section 2 for displacing an object lens 1 in two mutually orthogonal directions, as will be later described, and a light emitting and receiving composite unit 3 provided with a semiconductor laser unit and a light receiving element (not shown). The object lens 1 is arranged to converge a light beam projected on an optical disc 101 on the signal recording surface of the disc 101.

The object lens driving section 2 includes a lens bobbin 7 supported for movement in two mutually orthogonal directions via a movable arm member 6 on a supporting section 5 supported by a supporting substrate <. The movable arm member 6 is formed of a resilient material, such as synthetic resin, and is provided with first and second hinges of reduced thicknesses such that the arm member 6 may be displaced in two mutually orthogonal directions.

The lens bobbin 7 is provided with the object lens 1, a pair of focusing coils 8 and two pairs of tracking coils 9. A pair of magnets 11 are attached by means of a pair of yoke sections 10 suspendedly mounted to the supporting substrate 4. The magnets 11 are arranged in opposition to the focusing and tracking coils 8, 9. The coils 8, 9, the yoke section 10 and the magnets 11 make up a magnetic circuit. Thus, when a focusing drive current based on a focusing error signal is supplied to the focusing coil 8, the lens bobbin 7 is displaced along the axis of the object lens 1, shown by an arrow F in Figure 3, that is, in the focusing direction. On the other hand, when a tracking driving current based on a tracking error signal is supplied to the tracking coil 9, the lens bobbin 7 is displaced in a direction at right angles to the optical axis of the object lens 1 indicated by an arrow T in Figure 3, that is, in the tracking direction.

The object lens driving unit 2 is arranged so that the object lens 1 faces the optical disc 101. The optical axis of the object lens 1 is approximately at right angles to the surface of the optical disc 101, while the tracking direction is approximately at right angles to the tangential direction of a recording track (not shown) formed along the circumference of the optical disc 101, as indicated by an arrow P in Figure 3.

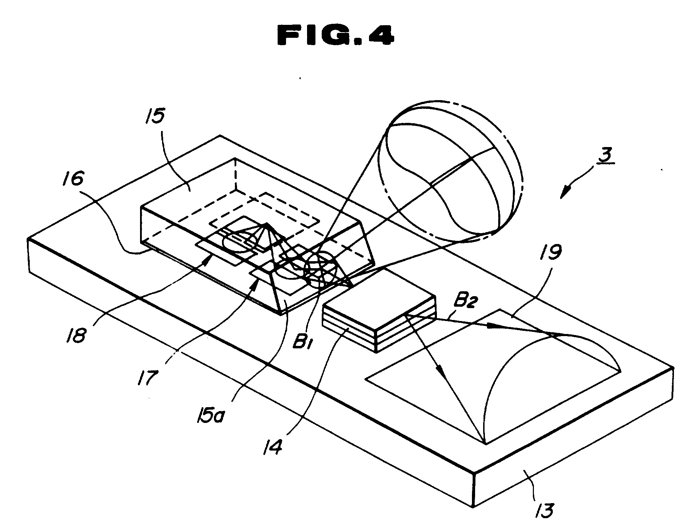

The light emitting/receiving composite unit 3 is mounted within a package 12 and, as shown in Figure 4, is provided with a semiconductor substrate 13. On this semiconductor substrate 13, there is provided a semiconductor laser unit 14 formed by a lamination of semiconductor layers including the substrate 13. The semiconductor laser unit 14 is a so-called gain-waveguide type semiconductor laser unit performing a multi-mode oscillation and arranged to undergo lower levels of unit noise due to the return light beam from the optical disc 101.

The semiconductor laser unit 14 exhibits so-called astigmatic difference such that the light beam emanating from the laser unit 14 undergoes astigmatism. That is, the apparent light emitting position within the meridional plane of the light beam, namely the plane perpendicular to the junction surfaces of the semiconductor layers making up the semiconductor laser unit 14 and including the optical axis, is at the end face position of the semiconductor laser unit 14, whereas the apparent light emitting position within the sagittal plane of the light beam, that is, the plane parallel to the aforementioned junction surface and inclusive of the optical axis, is at a position displaced from the end face by about 20 to 30 µm into the interior of the semiconductor laser unit 14. Consequently, the equiphase wave surface of the light beam is bent most prominently within the meridional plane, with the curvature becoming least within the sagittal plane.

In a direction along which one light beam B1 is emitted from the semiconductor laser unit 14, a beam splitter prism 15 is secured on the semiconductor substrate 13 (such as with an adhesive) for confronting the laser unit 14. The beam splitter prism 15 has its side confronting the semiconductor laser unit 14 inclined by a predetermined angle with respect to the optical axis of the light beam from the semiconductor laser unit 14 and coated with a transmitting/reflecting film 15a. As a result, the light beam B1 emanating from the semiconductor laser unit 14 is partially reflected by the transmitting/reflecting film 15a so as to exit from the substrate 13 at a predetermined angle.

On the semiconductor substrate 13 and at an area where the beam splitter prism 15 is provided, there are formed first and second split detectors 17, 18, that is, light receiving units each composed of a plurality of light receiving elements.

In a direction along which another light beam B2 is emitted from the semiconductor laser unit 14, there is formed a monitoring detector 19 on the semiconductor substrate 13 for receiving the other light beam B2. The monitoring detector 19 functions to detect the intensity of the light beam emitted by the semiconductor laser unit 14 so as to control the light emitting power of the semiconductor laser unit 14 on the basis of the detected light intensity by means of an automatic power control circuit (not shown).

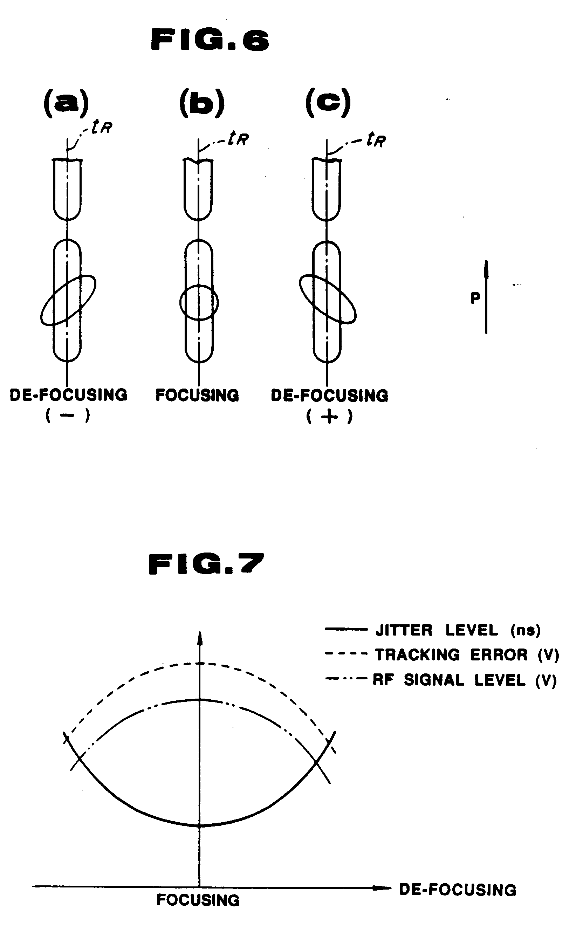

The light beam exiting the light emitting/receiving composite unit 3 is incident on the object lens 1, as shown in Figure 3, so as to be projected on the signal recording surface of the optical disc 101. Also, the light emitting/receiving composite unit 3 is arranged so that the meridional surface of the light beam is at an angle of approximately 45° with respect to the tangential direction of the recording track on the optical disc 101 indicated by the arrow P in Figure 3. Therefore, should a so-called de-focusing occur, the beam spot formed on the signal recording surface assumes the shape of an ellipse having its major axis inclined by about 45° with respect to the recording track tR, as indicated in Figures 6(a) and (c).

The light beam projected on the signal recording surface is reflected by the recording surface before returning to the transmitting/reflecting film 15a by way of the object lens 1. The reflected light beam is transmitted through the film 15a to the beam splitter prism 15 before being received by the first and the second split detectors 17, 18 via a prescribed light path.

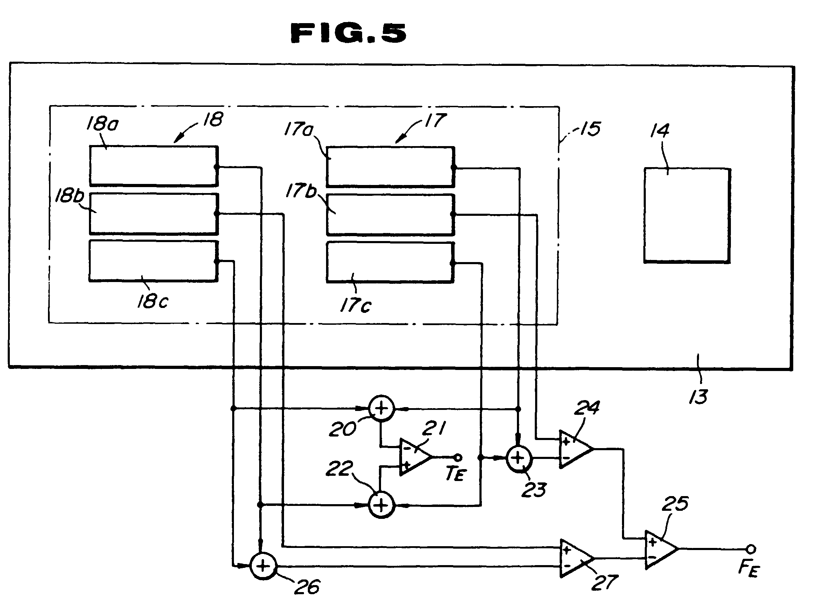

As shown in Figure 5, the split detectors 17, 18 are split into first to third light receiving elements 17a, 17b, 17c; 18a, 18b, 18c, respectively, along split lines extending parallel to one another.

The light receiving elements of the split detectors 17, 18 are arrayed parallel to the meridional plane of the light beam.

The output of the first light receiving element 17a of the first split detector 17 and the output of the third light receiving element 18c of the second split detector 18 are combined by a first adder 20 before being supplied to an inverting input terminal of a first subtractor 21. The output of the third light receiving element 17c of the first split detector 17 and the output of the first light receiving element 18a of the second split detector 18 are combined by a second adder 22 before being supplied to a non-inverting input terminal of the first subtractor 21. The output of the second subtractor 21 represents a tracking error signal TE.

The outputs of the first light receiving element 17a and the third light receiving element 17c of the first split detector 17 are summed by a third adder 23 before being supplied to an inverting input terminal of a second subtractor 24. A non-inverting input terminal of the second subtractor 24 is supplied with an output of the second light receiving element 17b of the first split detector 17. The output signal of the second subtractor 24 is supplied to a non-inverting input terminal of a third subtractor 25.

The outputs of the first light receiving element 18a and the third light receiving element 18c of the second split detector 18 are combined by a fourth adder 26 before being transmitted to an inverting input terminal of a fourth subtractor 27. To a non-inverting input terminal of the fourth subtractor 27 is supplied the output of the second light receiving element 18b of the second split detector 18. The output signal of the fourth subtractor 27 is transmitted to an inverting terminal of the third subtractor 25. The output signal of the third subtractor 25 represents a focusing error signal FE.

The sum of the output signals of the split detectors 17 and 18 represents the data read-out signal (RF signal).

In the above-described optical pickup device, should de-focusing occur, as shown in Figures 6(a) and (c), no difference in the beam spot area measure on the recording track tR is caused no matter in which direction the de-focusing has occurred. For this reason, in the present optical pickup device, with the focusing position being the position at which jitter in the data signals read from or written on the optical disc 101 is minimised, this de-focusing position is coincident with the position at which the level of the tracking error signal TE and that of the RF signal become maximum, as shown in Figure 7. That is, the symmetrical relation of the levels of the RF signal and the tracking error signal TE with respect to the focusing position is maintained.

Inasmuch as the symmetry of the levels of the RF signal and the tracking error signal TE with respect to the focusing position is maintained in this manner, so-called de-servoeing is less likely to occur at the time of de-focusing caused by de-centring or deviation from planarity of the optical disc 101.

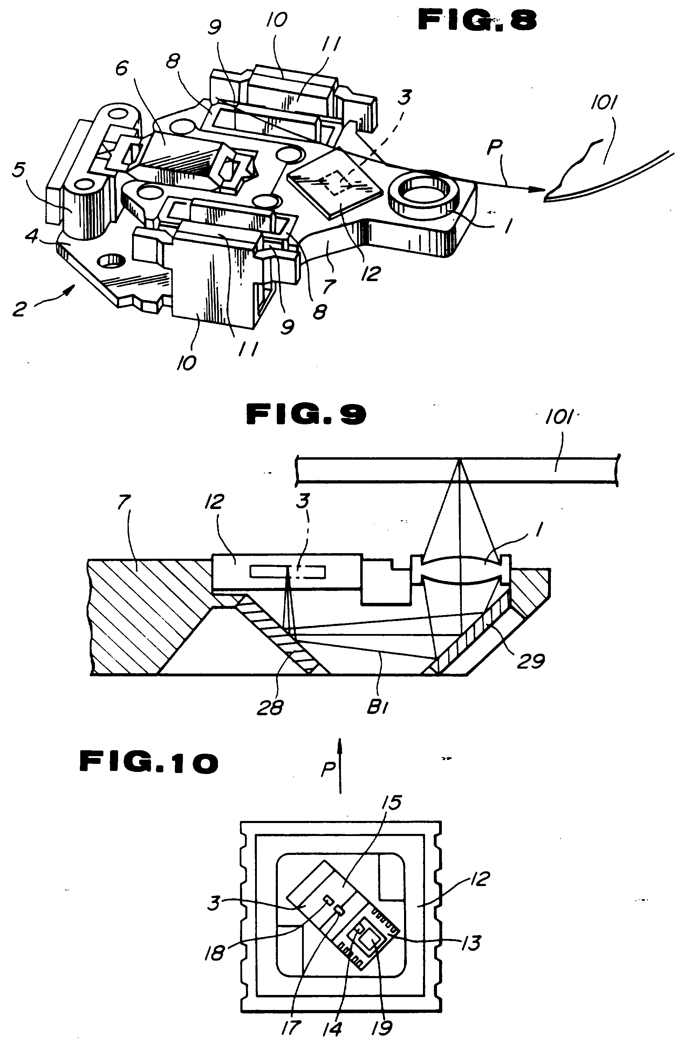

In the optical pickup device shown in Figure 8, the package 12 containing the light emitting/receiving composite unit 3 may be provided on the lens bobbin 7. In another embodiment, as shown in Figure 9, a light beam B1 emanating from the semiconductor unit 14 is guided by first and second mirrors 28, 29 mounted on the lens bobbin 7 before being incident on the object lens 1 mounted on the lens bobbin 7.

In the present embodiment, the light emitting/receiving unit 3 is similarly arranged so that the meridional plane of the light beam is at an angle of approximately 45° with respect to the tangential direction of the recording track on the optical disc 101. Hence, should de-focusing occur, the beam spot formed on the signal recording surface assumes the shape of an ellipse having its major axis at an angle of approximately 45° with respect to the recording track tR, as indicated in Figure 6. In this manner, the symmetrical relation of the signal levels of the tracking error signal TE and the RF signal may be maintained with respect to the focusing position, as shown in Figure 7.

In the above-described embodiments, the light emitting/receiving composite unit 3 may alternatively be mounted at an angle of approximately 45° with respect to the package 12, as shown in Figure 10. In this case, should the outer lateral side of the package 12 be positioned on the basis of the reference plane made parallel to the tangent of the recording track, for example, the meridional plane of the light beam emanating from the light emitting/receiving composite unit 3 may be set at a predetermined angle with respect to the tangential line to facilitate assembly.

In the above-described embodiments, the angle between the meridional plane and the tangential line to the recording track need not be 45°. For example, it may be elsewhere in the range of 30° to 60° to maintain sufficient symmetry of the signal levels of the tracking error signal TE and the RF signal with respect to the focusing position.

The present invention also is not limited to the above-described embodiments of the optical pickup device provided with a light emitting/receiving composite element, but may be applied to an optical pickup device in which the semiconductor laser unit and the light receiving elements are provided separately in a frame of the optical system.

According to the optical pickup devices embodying the present invention, as described hereinabove, asymmetries of the beam spot emanating from the semiconductor laser unit with respect to a line tangential to the recording track on the optical disc (which are brought about as a function of the de-focusing direction due to astigmatism of the light beam) may be compensated, so that the intensity of the reflected light from the recording track does not differ as a function of the de-focusing direction.

Thus it is possible to provide an optical pickup device which is reduced in size through the use of a semiconductor laser unit which is less subject to the return light beam from, for example, the gain waveguide type laser unit and in which the effect caused by the astigmatic difference inherent in the semiconductor laser unit may be sufficiently compensated to improve the properties associated with de-focusing.

## Claims

1. An optical pickup device in which a light beam from a laser light source (14) is convergeable by an object lens (1) onto a signal recording surface of an optical disc (101) to follow recording tracks formed on the signal recording surface, wherein the light source comprises a semiconductor laser unit (14); and
the light beam emanating from the semiconductor laser unit (14) is arranged in such a manner that the light beam is so projected onto the optical disc (101) that the angle between the meridional plane of the light beam and a line tangential to the recording tracks is about 45° whereby asymmetries of the light beam on the optical disc (101) on both sides of the tangential line arising as a function of the direction of de-focusing of the beam spot may be compensated;
characterised in that, to provide focus error compensation the semiconductor laser unit (14) is provided on a semiconductor substrate (13) on which a beam splitting prism (15) is affixed and on which a pair of split detectors (17, 18) are formed at an area where the beam splitting prism (15) is provided, so as to form a light emitting/receiving composite unit (3);
the pair of split detectors (17, 18) are each split into first to third light receiving elements (17a,17b,17c,18a,18b,18c) along split lines extending parallel to one another; and
the light receiving elements (17a,17b,17c,18a,18b,18c) of the split detectors (17, 18) are arrayed parallel to the meridional plane of the light beam.

2. A device according to claim 1, wherein the semiconductor laser unit is a gain waveguide type unit (14).

3. A device according to claim 1, wherein a package (12) accommodating the light emitting/receiving composite unit (3) is so mounted that said angle is obtained.

4. A device according to claim 1, wherein the light emitting/receiving composite unit (3) is so accommodated within a package (12) that said angle is obtained.

## Patentansprüche

1. Optische Abtasteinrichtung,
bei der ein Lichtstrahl aus einer Laserlichtquelle (14) mit Hilfe eines Objektivs (1) auf einer Signalaufzeichnungsfläche einer optische Platte (101) zur Konvergenz gebracht werden kann, um auf der Signalaufzeichnungsfläche ausgebildeten Aufzeichnungsspuren zu folgen, wobei die Lichtquelle eine Halbleiterlasereinheit (14) aufweist,
und bei der der von der Halbleiterlasereinheit (14) ausgehende Lichtstrahl in der Weise angeordnet ist, daß der Lichtstrahl so auf die optische Platte (101) projiziert wird, daß der Winkel zwischen der Meridionalebene des Lichtstrahls und einer tangential zu den Aufzeichnungsspuren verlaufenden Linie etwa 45° beträgt, so daß Unsymmetrien des Lichtstrahls auf der optischen Platte (101) zu beiden Seiten der tangentialen Linie, die in Abhängigkeit von der Defokussierungsrichtung des Strahlpunkts auftreten, kompensiert werden können,
**dadurch gekennzeichnet,**
daß zur Kompensation von Fokussierungsfehlern die Halbleiterlasereinheit (14) auf einem Halbleitersubstrat (13) angeordnet ist, auf dem ein Strahlenteilerprisma (15) befestigt ist und auf dem in einem Bereich, in dem das Strahlenteilerprisma angeordnet ist, ein Paar von geteilten Detektoren (17, 18) ausgebildet sind, so daß eine Licht-Sende/Empfangs-Verbundeinheit (3) gebildet wird,
daß das Paar von geteilten Detektoren (17, 18) entlang parallel zueinander verlaufender Teilungslinien jeweils in erste bis dritte Lichtempfangselemente (17a, 17b, 17c, 18a, 18b, 18c) unterteilt sind
und daß die Lichtempfangselemente (17a, 17b, 17c, 18a, 18b, 18c) der geteilten Detektoren (17, 18) arrayartig parallel zu der Meridionalebene des Lichtstrahls angeordnet sind.

2. Optische Abtasteinrichtung nach Anspruch 1, bei der die Halbleiterlasereinheit (14) eine Einheit vom Verstärkungs-Wellenleitertyp ist.

3. Optische Abtasteinrichtung nach Anspruch 1, bei der ein die Licht-Sende/Empfangs-Verbundeinheit (3) aufnehmendes Packungsgehäuse (12) so montiert ist, daß der genannte Winkel erzielt wird.

4. Optische Abtasteinrichtung nach Anspruch 1, bei der die Licht-Sende/Empfangs-Verbundeinheit (3) in einem Packungsgehäuse (12) so angeordnet ist, daß der genannte Winkel erzielt wird.

## Revendications

1. Dispositif de lecteur optique dans lequel un faisceau lumineux provenant d'une source de lumière laser (14) peut être convergé par une lentille d'objectif (1) sur une surface d'enregistrement de signal d'un disque optique (101) afin de suivre des pistes d'enregistrement formées sur la surface d'enregistrement de signal, dans lequel la source de lumière comprend une unité de laser à semiconducteur (14); et
le faisceau lumineux émanant de l'unité de laser à semiconducteur (14) est agencé de telle sorte que le faisceau lumineux soit projeté sur le disque optique (101) de telle sorte que l'angle entre le plan méridien du faisceau lumineux et une ligne tangentielle aux pistes d'enregistrement vale environ 45° de telle sorte que des asymétries du faisceau lumineux sur le disque optique (101) sur les deux côtés de la ligne tangentielle qui apparaissent en tant que fonction de la direction de défocalisation du spot de faisceau puissent être compensées,
caractérisé en ce que, pour assurer une compensation d'erreur de focalisation, l'unité de laser à semiconducteur (14) est prévue sur un substrat semiconducteur (13) sur lequel un prisme de séparation de faisceau (15) est fixé et sur lequel deux détecteurs multi-éléments (17, 18) sont formés au niveau d'une zone où le prisme de séparation de faisceau (15) est prévu de manière à former une unité composite d'émission/réception de lumière (3) ;
les deux détecteurs multi-éléments (17, 18) sont chacun partagés selon des premier à troisième éléments de réception de lumière (17a, 17b, 17c, 18a, 18b, 18c) le long de lignes de partage s'étendant parallèlement les unes aux autres ; et
les éléments de réception de lumière (17a, 17b, 17c, 18a, 18b, 18c) des détecteurs multi-éléments (17, 18) sont agencés parallèlement au plan méridien du faisceau lumineux.

2. Dispositif selon la revendication 1, dans lequel l'unité de laser à semiconducteur est une unité du type guide d'onde à gain (14).

3. Dispositif selon la revendication 1, dans lequel un boîtier (12) recevant l'unité composite d'émission/réception de lumière (3) est monté de telle sorte que ledit angle soit obtenu.

4. Dispositif selon la revendication 1, dans lequel l'unité composite d'émission/réception de lumière (3) est reçue à l'intérieur d'un boîtier (12) de telle sorte que ledit angle soit obtenu.
